# EUROPEAN PATENT APPLICATION

(11) **EP 4 280 450 A1**
(43) Date of publication of application: **22.11.2023**
(21) Application number: 21919979.1
(22) Date of filing: 09.12.2021
(51) Int. Cl.: H02P 6/14

(54) **METHOD FOR SWITCHING THE WINDINGS OF AN ELECTRIC MACHINE**

(30) Priority: 12.01.2021 RU 2021100368
(71) Applicant: Tau, Tatyana Anatolevna, kv. 54 Saratov, 410015 (RU); Sieklucki, Sergey Anatolevich, Shelkovskaya 366108, Chechenskaya respublika (RU)
(72) Inventor: GOLOVKO, Oleg Anatolevich, Saratovskaya obl. 410508 (RU); LAGUTIN, Sergey Sergeevich, Saratov 410048 (RU); SIEKLUCKI, Sergey Anatolevich, Shelkovskaya (RU)
(74) Representative: Sach, Greg Robert
(86) International application number: PCT/RU2021/050425
(87) International publication number: WO 2022/154694

(57) **Abstract**

The invention relates to the field of electrical engineering, specifically pertaining to systems for controlling electric machines. The technical result of employing the switching method described below is that of increasing the operating efficiency of an electric machine by recovering energy from transient processes occurring in the windings of electric machines. The claimed method for switching the windings of an electric machine consists in that, during operation of the electric machine, all the power phase circuits are momentarily interrupted at the time when the phase voltage across the winding begins to fall after having passed its maximum value. The angular magnitude of the power phase circuit interruption pulse is directly dependent on the magnitude of the current flowing through said power phase circuits.

## Description

The invention relates to the field of electrical engineering in terms of control systems for electrical machines.

There is an electronic switch (certificate of authorship SU 224584), containing switching diodes, included in a bridge circuit; and the generator of multipolar pulses connected to one diagonal of the bridge, and to the other - the source of the switching signal, characterized in the fact that to increase the accuracy of switching and reducing the direct passage in the load of switching voltage, the latter is applied from the generator of radio pulses, whose carrier frequency is n times higher than the frequency of the switching signal, and an additional diode bridge is connected in parallel in the opposite direction.

The method of operation of the described commutator is not suitable for switching power circuits of electrical machines.

Also, there is a controlled electronic switch (patent RU 2628129), characterized by the fact that it contains: a threshold amplifier on transistor VT1 with a programmatically variable measuring shunt-resistor R-s, connected in a circuit between the base and the emitter of the transistor of the threshold amplifier, where the emitter of the transistor and the first upper output of the shunt-resistor R-s are the input of the device; a power switch organized on the field-effect transistor VT3, connected with its source to the base terminal of VT1 and the second terminal of the threshold amplifier's shunt-resistor R-s, where the device output is the drain of the transistor VT3, the gate of the transistor VT3 is connected to the resistive divider R4, R5 and the cathode of the diode VD1, and the middle point is connected to the gate of the control power transistor VT3; start-up assembly node consisting of transistor VT2 and divider organized by C1, R1, R2, the control input of which is the lower terminal of the control input chip D1, with the emitter of transistor VT2 connected to the lower supply voltage, and the collector - to the lower terminal of resistor R3 and the upper input terminal of the upper channel of chip D2, while the outer terminals of the divider C1 and R2 are connected to the supply voltage circuits; a trigger organized on the chip D2, in which the input of the upper channel is connected to the lower terminal of the resistor R3 and collector of the transistor VT2, the lower input terminal of the upper channel is connected to the upper input terminal of the second channel, and the lower input terminal of the second channel is connected to the lower level of the supply voltage, and the upper output terminal of the first channel is connected to the upper level of the supply voltage, the lower output terminal of the first channel is connected to the collector of transistor VT1, the upper terminal of resistor R3 and the anode of diode VD1, both output terminals of the second channel are connected to the input of the external controlling computer; and a control device consisting of a control input chip D1, the lower output terminal of which is connected to the lower terminal of the resistor R5, and the upper output terminal - to the lower level of the supply voltage.

The described switch has only one switching arm and is therefore only suitable for the implementation of a direct current supply-disconnection circuit and a protective load disconnection.

During commutator operation, phenomena occur in the windings of electrical machines which are related to their inductance and which affect the operation of the electrical machine as a whole. These are called transient responses or self-induced EMFs and only appear in dynamics. At low speed and under low load, their effect is insignificant and they cause little to no resistance to the rotor's movement, but as the speed increases, their effect grows, resulting in a significant power cost to overcome them. The EMF energy arising at the motor terminals during commutator operation is normally dissipated in RC circuits or flyback diodes connected in parallel to the motor windings and is not used to improve the efficiency of the electrical machine.

The technical result of the switching method described below is to increase the efficiency of the electrical machine by recovering the transient response energy of the electrical machine windings.

The attached drawings show:
Fig. 1 - a vector diagram of the breaker operation;
Fig. 2 - schematic diagram of the switching method;

The following elements' positions are marked in the diagram:
1 -A low-pass filter that removes the upper switching noise spectra generated by electronic switches and signals at the frequency of the PWM regulators;
2 -a differentiator that determines the reversal torque of the phase voltage vector;
3 - Phase differentiator pulse adder operating in OR element logic;
4 - current amplifier;
5 - single-oscillator-interrupt pulse shaper with adjustable duration;
6 - breaker switch for the power phase circuits of the electrical machine;
7 - diode bridge rectifier;
8 - smoothing capacitors;
9 - power switch for the electrical machine controller;
10 - standard controller of a series-produced electrical machine (commutator, controller, driver, frequency converter, collector-brush unit, etc.)
11 - current measuring shunt;
12 - battery pack;
13 - electrical machine.

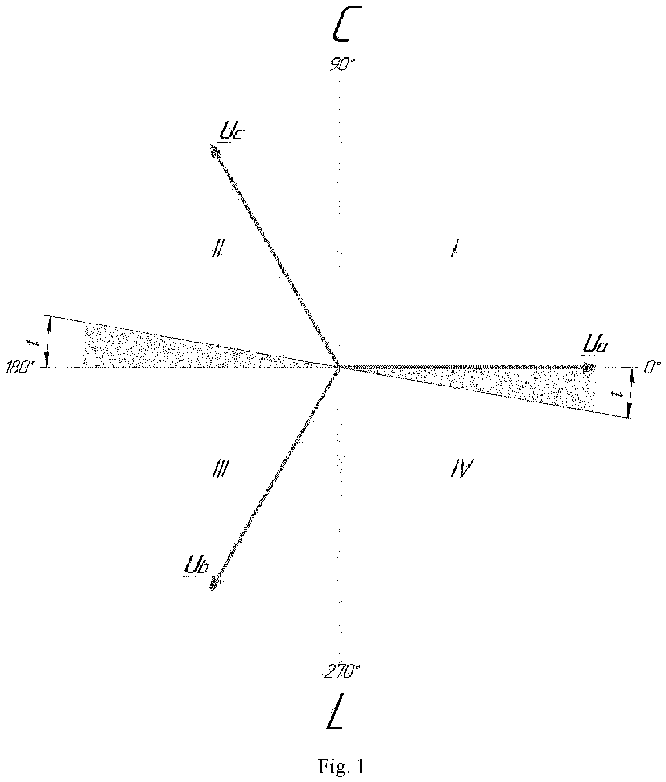

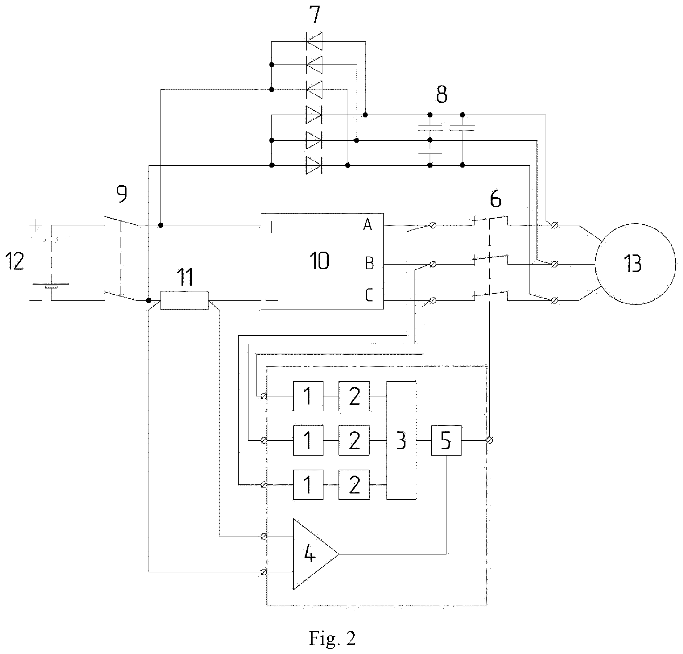

Modem brushless motors are operated with electronic controllers - winding commutators or frequency converters. During the operation of the commutator, when the electrical machine is loaded, during the transition of the voltage vector from the fourth to the first or from the second to the third quadrant of the vector diagram (Fig. 1), during the operation of PWM controllers in the circuit of the electrical machine windings, microsecond current pulses occur, in their amplitude several times higher than the maximum operating values. These current pulses can burn the crystals of power transistors of electronic switches, which reduces the service life of the controller 10 (Fig.2) and can lead to its early failure. With increasing speed, the frequency and speed of transient responses increase and with it their amplitude and intensity increase as well. The physical effect of these processes manifests itself in the form of counteracting forces of an impulsive nature, to overcome which the energy from the power supply of the electrical machine is expended.

To avoid the effects of transient current pulses on switching elements, it is necessary to "discharge" the windings whenever the voltage vector crosses the abscissa axis of the vector diagram, i.e. changes its sign from "+" to "-" or from "-" to "+", i.e. at the moment when the phase voltage in the winding begins to decrease after passing the maximum value. To do this, it is necessary to cut the winding circuits of the machine for a time t (Fig.1) equal to the duration of the first half-period of a transient response. This time usually ranges from a few microseconds to several hundreds and is dependent on the magnitude of the interrupted current. The angular value of the duration of the interrupting pulse t (Fig. 1) can range from 0 to 10 degrees and depends on the amount of current flowing in the windings of the electrical machine. During this time, the self-induction EMF is emitted at the winding terminals, which can be many times higher than the supply voltage.

Let us consider a scheme of implementation of the claimed method on the example of a device to supplement the functionality of the controller (element 10 in Fig. 2) of serial production to control the operation of a synchronous motor. The scheme of the auxiliary device works as follows. The differentiating element 2, connected to the phase output of the controller 10 through the low-pass filter 1, highlights in the spectrum of the output voltage the moments of change of the vector sign, i.e. the moments when the voltage began to increase or vice versa when it began to drop. At this moment, a microsecond pulse is formed at the output of the differentiating element 2, which is applied to the phase pulse adder 3. The adder collects the pulses from all phase channels by OR logic and forms the trigger pulses which are routed to the monostable multivibrator - single-oscillator 5. The single-oscillator starts along the leading edge of the pulse and at every arriving pulse opens the breaker's power switch 6 for the time t which depends on the value of the current flowing through the current measuring shunt 11. The signal from the current measuring shunt is amplified by the direct current amplifier 4 and goes to the circuit of the single-oscillator 5, thus controlling the time of interruption of the power circuits of the electrical machine 13. When the power circuits A, B and C of the controller 10 are interrupted, the self-induction current emission occurs from the windings of the electrical machine 13 which charges the battery 12 through the diodes of the rectifier bridge 7 and the power switch 9.

In order to avoid overvoltage damage to transistors of electronic switches 6, it is necessary to reduce the amplitude of the inrush voltage of the EMF. For this purpose, capacitors 8 are connected in parallel to the outputs of the electrical machine and are used for reactive power compensation. Capacitor capacity is calculated by the value of the active resistance of the shunted windings and the effective time of the first half-period of the transient response. The operating voltage of the capacitors is selected to be two to three times higher than the operating voltage of the electrical machine. The energy of the self-induction pulse passes into the capacitors 8, then from there through the diodes 7 and the power switch 9 flows into the accumulator. The pulse diodes 7 are connected with the cathode to the plus side and the anode to the minus side of the power supply. Thus, a current pulse from each phase output of the electrical machine winding 13 is applied to the desired pole of the battery of electrical energy 12, recovering the energy of the self-induction pulse and thus reducing the power consumption of the electrical machine 13. The operating current of the pulse diodes 7 is selected to be two to three times higher than the maximum operating current of the electrical machine. The pulse diodes have a simpler design than transistors and can withstand the effects of high-energy current pulses that occur during transient responses without any consequences.

When using the described Method in modern programmable controllers, the functions of the breaker switch 6 can be performed by the output transistors of the controller 10. The protection diodes of these transistors, integrated on the same crystal as the transistor, will act as a pulse diode bridge 7. The role of the current measuring shunt will be performed by the current measuring protection element of the controller 10. The controller logic should be supplemented with the function of interruption of all the phase power circuits at the moment when the phase voltage on the winding begins to decrease after passing the maximum value. The duration of the interrupt pulse is determined by the amount of current in the electrical machine windings - the higher the current, the longer the duration of the interrupt pulse.

Thus, due to the transient response energy arising in the electric motor windings during the operation of the electronic switch, the power consumed by the motor from the power source is reduced while maintaining the output mechanical power on the shaft and energy recovery is performed in all modes of the motor operation, including acceleration mode and driving uphill, which cannot be done in the usual commutator operation mode, in which energy recuperation is possible only in the braking mode of the motor. This scheme increases the vehicle's mileage by 10-25% and has little influence on the terrain.

The described switching method also works with a generator if it is used to generate direct current electrical power. The switching scheme remains unchanged - Fig. 2, where the generator controller is used as a switch. In such connection scheme at low speed or at high loads the pulse charging of the battery directly from the generator occurs, facilitating the work of controller, reducing the input force on the generator shaft and increasing production of electric power by 10-25%. This is very important when using the generator as part of a wind or hydraulic power plant.

The method described was tested on several prototype commutators. When connecting the switch to the synchronous motor, the no-load current was reduced from three amperes to one ampere and did not increase when the RPM was increased. Operating RPM remained unchanged, tractive power increased in the high RPM range. Engine efficiency increased from 10% at low RPM to 25% at high RPM with no reduction in torque. Similar changes in input torque were noted when this synchronous motor was used as a generator. Charging current pulses to the battery followed in all modes, increasing in intensity as the load increased.

## Claims

1. A method of switching the windings of an electrical machine which consists in interrupting all power phase circuits of the electrical machine for a time equal to the duration of the first half-period of the transient pulse in the windings of the electrical machine.

2. A method of switching the windings of an electrical machine according to Clause 1 is **characterised by** the fact that the duration of interruption of the power phase circuits of the electrical machine is determined by the value of the signal from the current measuring element.

3. A method of switching the windings of an electrical machine according to Clause 1 **characterised by** the fact that the angular value of the interruption pulse of the power phase circuits of an electrical machine has a direct dependence on the value of the current flowing in them.

4. A method of switching the windings of an electrical machine according to Clause 1 is **characterised by** the availability of electrical energy recovery in all operating modes of the electrical machine and, as a consequence, a reduction in the input power while maintaining the output power.
